Europäisches Patentamt

European Patent Office

Office européen des brevets

(11) Publication number: **0 445 633 A1**

# EUROPEAN PATENT APPLICATION

(21) Application number: 91102882.7

(22) Date of filing: 27.02.91

(51) Int. Cl.⁵: **B23K 26/00**, B23K 33/00

(30) Priority: 05.03.90 IT 8334290

(43) Date of publication of application:
11.09.91 Bulletin 91/37

(84) Designated Contracting States:
AT BE CH DE DK ES FR GB GR LI LU NL SE

(71) Applicant: PRIMA CIMOLAI SRL
Via XX Settembre 258/A
I-33080 Roveredo in Piano (PN)(IT)

(72) Inventor: Gilli, Luigi
Via G. Carducci 4
I-10032 Luserna S. Giovanni (TO)(IT)
Inventor: Cimolai, Luigi
Via San Rocco 86/1
I-33080 S. Quirino (PN)(IT)

(74) Representative: Petraz, Gilberto Luigi
GLP S.r.l. Piazzale Cavedalis 6/2
I-33100 Udine(IT)

(54) Method to weld metallic beams and metallic beams thus produced.

(57) Method to weld metallic beams and, in particular, metallic beams of which the component elements have to be anchored together in substantially orthogonal reciprocal positions, the welding being carried out by applying a laser beam (18) working head (19-119), such welding by laser beam (18) being performed on elements (15-16) of the metallic beam (10-11-12-13-14) which have been processed beforehand so as to include substantially prismatic coupling surfaces (20-21;24-25), the angle (α) of the prismatic conformation being such that the axis of the laser beam (18) lies in a plane (π) containing such coupling surfaces (20-21; 24-25).

Metallic beams suitable to be continuously welded by a laser beam (18) and undergoing the above method, the metallic beams including component elements (15-16) which have their coupling portions conformed as prisms (20-21; 24-25), such prismatic conformation (α) being a function of the laser welding means (18-19-119) employed in the welding operation.

fig.3

This invention concerns a method to weld metallic beams. To be more exact, the invention concerns a method suitable to obtain continuous welding of the component parts of metallic beams by applying a laser beam.

The method of the invention is used advantageously for the production of metallic beams having their component elements arranged at a right angle to each other.

The invention concerns also the metallic beams produced by the above method.

The method of the invention can be employed also for the jointing of metallic elements other than beams.

The state of the art covers methods to weld metallic beams and, in particular, beams having great lengthwise dimensions.

By metallic beams are meant all those beams having an H-shaped conformation and therefore a main central element and two flange elements, or else T-beams, angle bars, channel sections and Z sections, all such metallic beams belonging to the general category of beams with an open section.

Other beam configurations are also included such as, for instance, the so-called box-type beams having a closed section.

The above metallic beams include two or more elements positioned at a right angle to each other which have to be welded together to form the finished beam.

The welds have to be made either at lateral positions on an outer edge of the flange element or elements, as is the case with angle bars, channel sections and Z sections, or at central intermediate positions on the flange element or elements in the case of H-beams or T-beams.

In general the welds are of the submerged arc welding type with the use of filler rod and are carried out on appropriate equipment, which comprises one or more welding heads driven by a suitable mechanism so as to move along the line of the joint to be welded.

For this purpose the welding heads are fitted to trolleys able to run on rails parallel to the joints to be welded, but it is also possible to arrange that the parts to be welded are themselves moved so as to pass along the welding heads.

Systems are known for welding by laser beam without the use of filler rod, particularly by carbon dioxide laser ($CO_2$) or neodymium-doped yttrium-aluminium-garnet laser (NDYAG).

As is known, a laser beam is focused by lenses or mirrors on very small surfaces, on which are produced high densities of power that bring practically all materials to a molten state.

Owing to this concentration of power emitted by the laser beam it is possible to join elements together at a high speed with unimportant deformations on those elements, unlike what happens instead with other welding systems.

To be focused, the laser beam has a conical terminal conformation and is protected by a working head generally having a prismatic conformation, which provides application of the laser beam to the parts to be welded.

Inert protective gases are also employed which prevent oxidation of the molten portion and improve the transmission of energy to the parts to be joined.

The laser beam, although it offers the above advantages, is applied at present only to the butt jointing of metallic elements or in making joints at the outer edges of orthogonal connections such as angle bars, channel sections Z sections or the like.

When welding by laser beam, the elements to be united have to be processed beforehand with a given degree of precision; the other welding techniques, owing to their intrinsic characteristics, enable a relative working remedy to be made with regard to any lack of precision in the parts to be joined.

The restrictions in the use of the laser beam are due to the conical terminal conformation of the beam itself and to the inclusion of the coordinated prismatic working head, which does not allow the laser beam to be properly located on inner orthogonal joints such as those which have to be made on metallic H-beams or T-beams.

The present applicant has studied, tested and obtained a method for welding with laser beams, the method being suitable to overcome the problems of the state of the art.

The invention concerns also the metallic beams produced with this method.

The invention is set forth in the main claims, while the dependent claims describe various features of the invention.

The method of the invention provides for the metallic beam elements which have to be welded together in substantially orthogonal positions, to be worked beforehand in a suitable manner. Such working consists in preparation of the elements for coupling together in a prismatic manner, whereby the end of one of the elements is shaped prismatically, whereas a mating prismatic seating is machined in the other element.

Such prismatic working is generally obtained with milling machines of a conical shape, and therefore the current jargon usually decribes the prismatic working as conical processing and we shall refer to such processing hereinafter in the description.

This processing may therefore be conical, or semi-conical or of another similar type.

The conical shape thus processed may have a variable angular value, depending on the technical features of the application and of the laser device employed.

The conical shape, whatever it may be, has to be such as to enable the laser beam used to be correctly focused, that is to say, the axis of the cone consisting of the laser beam has to lie on a plane containing the conical surfaces to be united.

The processing of the elements to be coupled will enable the usual laser welding heads to be brought to the welding zones.

According to a variant a traditional welding operation of a type with an arc in an inert gas ($CO_2$), for instance, may cooperate with the laser beam welding operation.

These and other special features of the invention will be made clearer in the following description.

The attached figures are given as a non-restrictive example and show the following:

Fig.1 shows some types of metallic beams to which the method of the invention can be applied;

Fig.2 is a diagram of a working process according to the method of the invention;

Fig.3 is an enlarged diagram of the working process of Fig.2;

Fig.4 is a variant of Fig.3;

Fig.5 is a further variant of the invention.

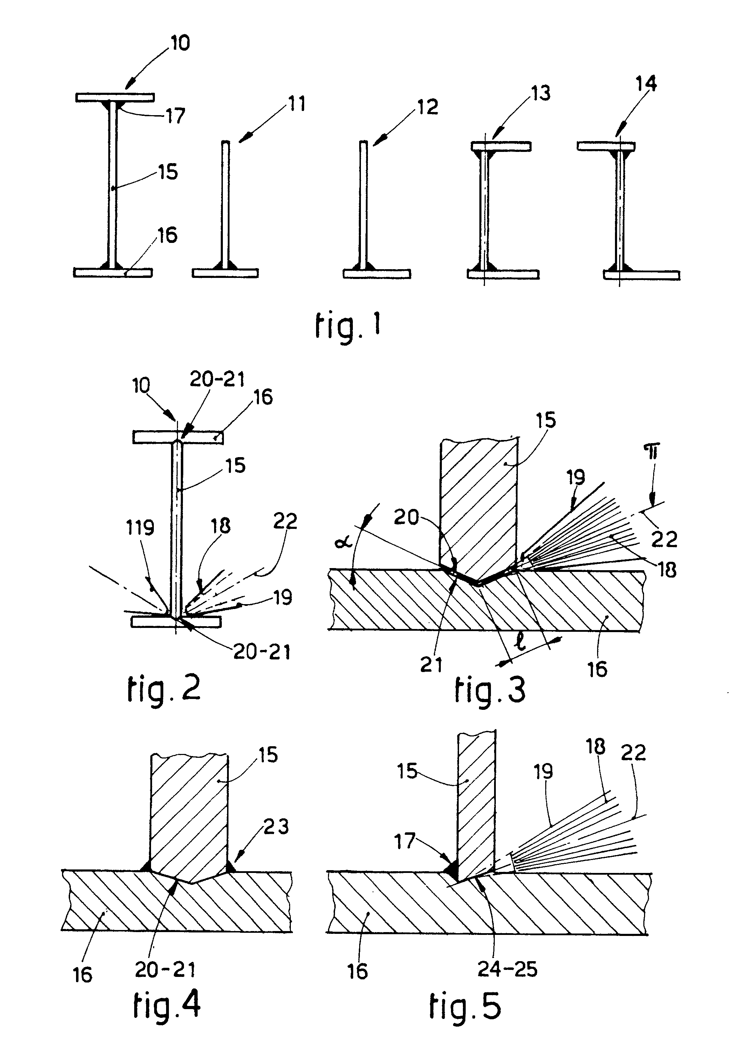

Fig.1 shows some currently used types of metallic beams to which the method of the invention can be applied. In the order shown in the figure, H-beams are referenced with 10, overturned T-beams with 11, angle bars with 12, channel sections with 13 and Z-sections with 14.

These types of metallic beams comprise a main central element 15 and at least one flange element 16; these elements 15-16 have to be joined to each other orthogonally by means of a weld which has to be made on four sides of the central element 15 and along the whole length of each metallic beam.

The welds are referenced with 17 in Fig.1 and represent the type employed in the state of the art and made with filler rod.

Fig.2 is a diagram of the application of the invention to a metallic H-beam 10. The welds to be made with a laser beam and shown diagrammatically with a cone 18 are carried out continuously without filler rod along the whole length of the metallic beam 10 along the orthogonal joint between the central element 15 and flange element 16 in the neighbourhood of the central line thereof.

The welding is performed with a working head 19 that may possibly cooperate with an analogous counterpart working head 119.

The working heads 19-119 will advantageously have a prismatic end conformation to protect and bring a laser beam 18 to the zone to be welded.

The central metallic beam element 15 has conically conformed ends 20 to cooperate with a mating conical seating 21 included in each flange element 16. These conically conformed ends 20 and seatings 21 are readied beforehand, by a simple milling operation for instance, on the central and flange elements 15-16 to be joined.

The working head 19-119 is equipped with suitable self-positioning sensors to compensate, during the welding, any processing errors included in the central and flange elements 15-16 to be coupled.

The conical portions 20-21 on the central and flange elements 15-16 may also undergo a surface finishing process before being coupled together.

The angle of taper ($\alpha$) of the conical processed surfaces of the central and flange elements 15-16 is a function of the conical conformation of the laser beam 18 and of the conditions of application of that beam 18. In any event the angle of taper ($\alpha$) has to be such that the axis 22 of the cone formed by the laser beam 18 lies on the surface "$\pi$" to be welded, namely on the plane containing the conical portions 20-21.

The focus of the laser beam 18 may fall within or outside the length "l" of the joint of the two conical portions 20-21, depending on the technological requirements of the weld to be made.

The example of Fig.3 shows two equal counterpart portions 20 equal to the two mating portions 21.

Provision can be made for the two portions 20 to be different from each other in length "l" or in their angular arrangement but the same as the mating portions 21.

The present applicant has found by experiments that by means of the method of the invention any type of metallic beam normally employed in current technical applications can be welded with excellent results.

It can be stated as an example that metallic beams having a weld length "l" of about 10 mm. and a taper angle ($\alpha$) in the range of $10°$ to $15°$ have been welded, the thickness of the central beam element 15 being about 17 to 18 mm., while the thickness of the flange element 16 could be varied as desired, a laser device being used with an output power of 5 Kw, while the speed of displacement of the working head 19-119 during welding was of the order of one metre per minute.

Fig.4 shows a possible variant of the method of the preceding figures, according to which in special conditions of application a slight seam weld 23 of a traditional type can be added to the laser weld described above for exceptional reasons, possibly of an aesthetic nature, or for surface finishing.

The variant of Fig.5 shows a solution which can be employed in particular for central beam elements 15 of a limited thickness or for box-type metallic beams; according to this solution the central element 15 is conformed terminally with a semi-conical end 24 to be united to a mating semi-conical seating 25 provided in the flange element 16. In this case the welding by laser beam 18 can be carried out on one side of the joint between the central and flange elements 15-16.

According to another variant a traditional weld 17 with filler rod can be made on the other side of the joint.

We have described here some preferred embodiments of the invention, but obviously a person skilled in this field can obtain other variants without departing thereby from the scope of the invention as claimed.

## Claims

1. Method to weld metallic beams and, in particular, metallic beams of which the component elements have to be anchored together in substantially orthogonal reciprocal positions, the welding being carried out by applying a laser beam (18) working head (19-119), the method being characterized in that such welding by laser beam (18) is performed on elements (15-16) of the metallic beam (10-11-12-13-14) which have been processed beforehand so as to include substantially prismatic coupling surfaces (20-21;24-25), the angle ($\alpha$) of the prismatic conformation being such that the axis of the laser beam (18) lies in a plane ($\pi$) containing such coupling surfaces (20-21; 24-25).

2. Method as claimed in Claim 1, in which the angle ($\alpha$) has a variable value.

3. Method as claimed in Claim 1 or 2, in which the length "l" of the coupling has a variable extent.

4. Method as claimed in any claim hereinbefore, in which the focus of the laser beam (18) falls within the length (l) of the coupling.

5. Method as claimed in any of Claims 1 to 3 inclusive, in which the focus of the laser beam (18) falls outside the length (l) of the coupling.

6. Method as claimed in any claim hereinbefore, in which the coupling surfaces (20-21) comprises two equal counterpart portions.

7. Method as claimed in any of Claims 1 to 5 inclusive, in which each of the coupling surfaces (20-21) comprises two portions differentiated from each other at least in their length (l).

8. Method as claimed in any of Claims 1 to 5 inclusive, in which each of the coupling surfaces (20-21) comprises two portions differentiated from each other at least in their angle of positioning ($\alpha$).

9. Method as claimed in any of Claims 1 to 5 inclusive, in which the coupling surfaces (20-21) comprises only one coupling portion.

10. Method as claimed in any claim hereinbefore, in which the additional finishing welds (23) may cooperate with the laser beam weld (18).

11. Method as claimed in Claim 9, in which a weld with filler rod (17) cooperates with the laser beam weld (18).

12. Method as claimed in any claim hereinbefore, in which the laser beam (18) working heads (19-119) comprise self-positioning sensors.

13. Method as claimed in any claim hereinbefore, in which a plurality of laser beam welds (18) can be made at the same time.

14. Metallic beams suitable to be continuously welded by a laser beam (18) and undergoing the method of the claims hereinbefore and being characterized in that they include component elements (15-16) which have their coupling portions conformed as prisms (20-21; 24-25), such prismatic conformation ($\alpha$) being a function of the laser welding means (18-19-119) employed in the welding operation.

fig. 1

fig. 2

fig. 3

fig. 4

fig. 5

European
Patent Office

EUROPEAN SEARCH
REPORT

Application Number

EP 91 10 2882

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 827 297 (FRAUNHOFER-GESELLSCHAFT ZUR FÖRDERUNG DER ANGEWANDTEN FORSCHUNG EV) * the whole document * | 1,4,14 | B 23 K 26/00 B 23 K 33/00 |
| A | DE-A-2 408 680 (MASCHINENFABRIK AUGSBURG-NÜRNBERG) * the whole document * | 1,6-9,14 | |
| A | EP-A-0 288 884 (BÜDENBENDER, BERND) * the whole document * | 1,5-8,14 | |

|  | | | TECHNICAL FIELDS SEARCHED (Int. Cl.5) |
|---|---|---|---|
| | | | B 23 K |

The present search report has been drawn up for all claims

| Place of search | Date of completion of search | Examiner |
|---|---|---|
| The Hague | 10 June 91 | ARAN D.D. |

CATEGORY OF CITED DOCUMENTS

X : particularly relevant if taken alone
Y : particularly relevant if combined with another
   document of the same catagory
A : technological background
O : non-written disclosure
P : intermediate document
T : theory or principle underlying the invention

E : earlier patent document, but published on, or after
   the filing date
D : document cited in the application
L : document cited for other reasons

& : member of the same patent family, corresponding
   document